# EUROPÄISCHE PATENTSCHRIFT

(11) **EP 3 253 978 B1**
(45) Veröffentlichungstag und Bekanntmachung des Hinweises auf die Patenterteilung: **20.02.2019**
(21) Anmeldenummer: 16726550.3
(22) Anmeldetag: 31.05.2016
(51) Int. Cl.: F16C 33/08, F16C 23/04, F16C 35/02, F16C 11/04, B66C 23/62

(54) **SCHWENKLAGERANORDNUNG MIT EINEM SCHWENKZAPFEN UND MINDESTENS EINEM LAGERBOCK UND EIN MONTAGEVERFAHREN HIERFÜR**
PIVOT BEARING ASSEMBLY HAVING A PIVOT PIN AND HAVING AT LEAST ONE BEARING BLOCK AND ASSEMBLY METHOD THEREFOR
SYSTÈME DE PALIER PIVOTANT COMPRENANT UN TOURILLON ET AU MOINS UN SUPPORT DE COUSSINET, ET PROCÉDÉ DE MONTAGE ASSOCIÉ

(30) Priorität: 02.06.2015 DE 102015108725
(43) Veröffentlichungstag der Anmeldung: 13.12.2017
(73) Patentinhaber: Terex Global GmbH, 8200 Schaffhausen (CH)
(72) Erfinder: HEINTZ, Rolf, 66894 Langwieden (DE)
(74) Vertreter: Moser Götze & Partner Patentanwälte mbB
(86) Internationale Anmeldenummer: PCT/EP2016/062249
(87) Internationale Veröffentlichungsnummer: WO 2016/193254

(56) Entgegenhaltungen:
- WO-A1-2004/092490
- CN-U- 202 880 715
- DD-B5- 294 307
- DE-U1- 29 606 489

## Beschreibung

Die Erfindung betrifft eine Schwenklageranordnung mit einem Schwenkzapfen und mindestens einem Lagerbock, in dem eine Lagerbuchse mit einer Lagerbohrung aufgenommen ist und in der Lagerbohrung der Schwenkzapfen gleitend gelagert ist.

Auch betrifft die Erfindung ein Montageverfahren für eine derartige Schwenklageranordnung.

Aus der deutschen Offenlegungsschrift DE 2 136 464 ist eine Schwenklageranordnung für einen freitragenden und ausfahrbaren Ausleger eines fahrbaren Krans bekannt. Der Ausleger ist in üblicher Weise im Bereich seines Fußes um einen horizontalen Schwenkzapfen mittels eines Wippzylinders schwenkbar. Der Schwenkzapfen ist Bestandteil der Schwenklageranordnung, mit der der Ausleger an einem Drehschemel angelenkt wird. Der Drehschemel weist zwei voneinander beabstandete und vertikale Seitenplatten auf, auf denen jeweils ein Lagerbock der Schwenklageranordnung angeordnet ist. Die Lagerböcke sind jeweils gegen Verdrehen gesichert und nehmen eine zylindrische Lagerbuchse auf, die vorzugsweise aus Bronze ist. Von den beiden miteinander fluchtenden Lagerbuchsen ist der Schwenkzapfen für die Schwenklagerung des Auslegers aufgenommen. Zusätzlich weisen die Buchen an den einander zugewandten Seiten einen ringförmigen Flansch auf, der jeweils an dem Ausleger anliegt. Hierdurch erfolgt über die Lagerbuchsen neben der Schwenklagerung des Auslegers auch dessen seitliche Führung.

Um die Leichtgängigkeit der Schwenklagerung zu erhalten und einen Verschleiß der Lagerbuchse aus Bronze auf dem Schwenkzapfen aus beispielsweise Stahl zu minimieren, werden die Lagerbuchsen mit Fett abgeschmiert. Derartige Schwenklageranordnungen werden mit relativ hohen Kräften belastet und führen hierbei nur geringe Winkelbewegungen aus, die im vorliegenden Fall kleiner als etwa 90° sind. Dies führt zu Drücken von beispielsweise bis zu 150 N/mm² in den Lagerbuchsen und damit auf das Fett. Hieraus folgt, dass das Fett entweicht und/oder nur schwer an die belasteten Stellen der Lagerbuchsen gelangt. Über Schmiernuten wird versucht, das Fett in der Lagerbuchse zu verteilen. Dennoch lässt es sich kaum vermeiden, dass das Fett entweicht und die Lagerbuchse anfängt, trocken zu laufen und zu verschleißen. Hiermit einher geht dann der sogenannte Haftgleiteffekt - auch Stick-Slip-Effekt genannt -, der zu einer ungleichförmigen Bewegung der Schwenklageranordnung aus Haften und Gleiten führt. Durch diesen Haftgleiteffekt kann die Hydraulik des Wippzylinders und der Stahlbau des Auslegers zum Schwingen angeregt werden. Diese Schwingungen können im Kranbetrieb ein feinfühliges Arbeiten beziehungsweise Positionieren des Auslegers erschweren.

Des Weiteren sind in der deutschen Offenlegungsschrift DE 1 575 531 A bereits Gleitlager beschrieben, die in üblicher Weise einen Außenring und Innenring aufweisen. Hierbei stehen der Außenring und der Innenring über eine ballige Fläche in Kontakt, die die Gleitlagerung bilden. Hierüber können Winkelbewegungen der zu lagernden Bauteile zu zugelassen werden. Der Außenring und der Innenring können aus Kunststoff hergestellt sein. Dies soll jedoch nur für niedrige Gleitgeschwindigkeiten möglich sein, da die schlechte Wärmeleitfähigkeit des Kunststoffes die im Gleitlager entstehende Wärme nicht abführen kann.

Ferner ist aus der Offenlegungsschrift DE 10 2008 047 270 A1 bereits ein Lagerelement bekannt, das als Ruderlager eines Schiffsruders eingesetzt wird. Dieses Lagerelement nimmt eine drehbare Welle auf, die um ihre Längsachse drehbar in dem Lagerelement gelagert ist. Hierfür ist die Welle in einer Lagerbuchse gleitend gelagert, die von einem Lagerzwischenring aufgenommen ist. Der Lagerzwischenring weist außen eine konvex gekrümmte Gleitfläche auf, die mit einer hierzu komplementär gekrümmten Gleitfläche eines Lageraußenrings im Eingriff steht. Über die gekrümmten Gleitflächen sollen Fluchtungsfehler der Welle ausgeglichen werden können. Um ein Rotieren des Lagerzwischenrings gegenüber dem Lageraußenring zu verhindern, ist die Gleitfläche des Lagerzwischenrings aufgeraut. Aus dem chinesischen Gebrauchsmuster CN 202 880 715 U ist außerdem ein Turmdrehkran mit einem Wipp-Ausleger bekannt, der um eine Lageranordnung mit zwei mit Abstand und zueinander gegenüberliegend angeordneten Lager-Elementen wippbar ist. Jedes dieser Lager-Elemente ist als sogenanntes sphärisches Lager ausgebildet, die Fluchtungsfehler von Achsen ausgleichen können, und besteht aus einem Lageraußenring, welcher sich gleitend auf einem Lagerinnenring abstützt. Die Kontaktflächen zwischen dem Lageraußenring und dem Lagerinnenring sind konvex beziehungsweise konkav, um besagte Fluchtungsfehler auszugleichen. Die Rotation in dem sphärischen Lager-Element findet zwischen dessen Lagerinnen- und - außenring an ihren Kontaktflächen statt.

Der vorliegenden Erfindung liegt die Aufgabe zu Grunde, eine verbesserte Schwenklageranordnung mit einem Schwenkzapfen und zwei voneinander beabstandeten Lagerböcken sowie ein verbessertes Montageverfahren hierfür zu schaffen.

Diese Aufgabe wird durch eine Schwenklageranordnung mit einem Schwenkzapfen und zwei voneinander beabstandeten Lagerböcken mit den Merkmalen des Anspruchs 1 und durch ein Montageverfahren für eine derartige Schwenklageranordnung mit den Merkmalen des Anspruchs 14 gelöst. Vorteilhafte Ausgestaltungen der Erfindung sind in den Unteransprüchen 2 bis 13 und 15 angegeben.

Erfindungsgemäß wird bei einer Schwenklageranordnung mit einem Schwenkzapfen und mindestens einem Lagerbock, in dem eine Lagerbuchse mit einer Lagerbohrung aufgenommen ist und in der Lagerbohrung der Schwenkzapfen gleitend gelagert ist, dadurch gekennzeichnet, dass die Lagerbuchse eine ballige Außenfläche aufweist, die für eine Ausrichtung der Lagerbuchse der Lagerbuchse in einer negativ balligen Innenfläche eingefügt ist und die Lagerbuchse nach erfolgter Ausrichtung in dem Lagerbock festgelegt ist.

Über die Ausrichtbarkeit der Lagerbuchse werden auch bei kleinen Winkelbewegungen der Lagerbuchsen auf dem Schwenkzapfen Schwingungsanregungen vermieden, die auf den Slip-Stick-Effekt zurückgehen. Auch können über diese Schwenklageranordnungen einfach Toleranzen in der Anordnung der Lagerböcke zueinander beziehungsweise eines Lagerbocks zu weiteren Maschinenteilen ausgeglichen werden.

Hierbei ist vorzugsweise der Lagerbock an einem Laschenrahmen angeschweißt. Über ein Verdrehen der Lagerbuchsen vor dem Festlegen kann somit ein Schweißverzug ausgeglichen werden. Ein Bearbeiten der Lagerflächen für die Lagerbuchsen nach dem Anschweißen der Lagerböcke kann somit vermieden werden, wodurch der zugehörige Stahlbau insgesamt einfacher und günstiger wird. Vorzugsweise ist hierbei die negativ ballige Innenfläche in einer Lagerbockbohrung ausgebildet.

Eine weitere Vereinfachung der Bauweise wird dadurch erreicht, dass die beiden Lagerbuchsen jeweils direkt in den Lagerbock eingeklebt sind.

Alternativ ist vorzugsweise die negativ ballige Innenfläche in einem Zwischenring ausgebildet, der in die Lagerbockbohrung eingefügt ist.

Eine weitere Vereinfachung der Bauweise wird dadurch erreicht, dass die Lagerbuchse in den Zwischenring eingeklebt ist und/oder der Zwischenring jeweils in die Lagerbockbohrung eingeklebt oder eingepresst ist.

Besondere Vorteile in Bezug auf die Ausrichtbarkeit ergeben sich, wenn zwei Lagerböcke voneinander beabstandet sind, die einen gemeinsamen Schwenkzapfen lagern.

Vorteilhafter Weise ist in Zusammenhang mit der Ausführung mit zwei voneinander beabstandeten Lagerböcken vorgesehen, dass die beiden Lagerbuchsen nach erfolgter Ausrichtung in dem Lagerbock derart festgelegt sind, dass in Längsrichtung des Schwenkzapfens gesehen die Lagerbohrungen der Lagerbuchsen miteinander fluchten. Über die zu einander fluchtenden Lagerbohrungen werden auch bei kleinen Winkelbewegungen der Lagerbuchsen auf dem Schwenkzapfen Schwingungsanregungen vermieden, die auf den Slip-Stick-Effekt zurückgehen. Auch können über diese Schwenklageranordnungen einfach Toleranzen in der Anordnung der Lagerböcke zueinander ausgeglichen werden.

Eine einfache Montage und Bauweise wird dadurch erreicht, dass die Lagerbohrung zylindrisch ist.

Besonders bevorzugt ist vorgesehen, dass die Lagerbuchse aus Kunststoff, insbesondere mit einer Gleitschicht, hergestellt ist. Hierdurch wird im Zusammenhang mit den zueinander fluchtenden Lagerböcken beziehungsweise auszurichtenden Lagerbuchsen erfolgreich vermieden, dass es insbesondere bei Schwenklageranordnungen, die mit relativ hohen Kräften belastet werden und hierbei nur geringe Winkelbewegungen ausführen, zu sogenannten Stick-Slip-Effekten kommt. Hierdurch werden entsprechende Reklamationen verringert und es ist kein Schmieren mehr erforderlich weder beim Hersteller noch beim Betreiber.

Bevorzugt findet die Schwenklageranordnung in einem Mobilkran Anwendung, bei dem eine erste Schwenklageranordnung zwischen einem Oberwagen und einem Fuß eines Auslegers angeordnet ist und/oder eine zweite Schwenklageranordnung zwischen dem Oberwagen und einem Wippzylinder und/oder oder eine dritte Schwenklageranordnung zwischen dem Ausleger und dem Wippzylinder angeordnet ist.

Hierbei ist bevorzugt der mindestens eine Lagerbock an dem Oberwagen oder dem Ausleger angeschweißt.

Im Zusammenhang mit einem Anschweißen der Lagerböcke kommt es zu einem Schweißverzug, so dass die Lagerbockbohrungen der gegenüberliegenden Lagerböcke einen Fluchtungsfehler zueinander aufweisen. Anstatt einer sonst üblichen aufwendigen und teuren Nachbearbeitung von Lagerbockbohrungen der Lagerböcke an den großen und schweren Auslegern, um den Fluchtungsfehler zu beheben, werden die Lagerbuchsen in den Lagerböcken entsprechend verdreht und anschließend in fluchtender Ausrichtung festgelegt. Eine Bearbeitung der Lagerböcke findet bereits vor dem Anschweißen statt, eine Bearbeitung der sonst zylindrischen Lagerbockbohrungen entfällt.

Insgesamt wird hierdurch der Slip-Stick-Effekt vermieden, wodurch ein Ruckeln der Ausleger beim Wippen nicht mehr auftritt. Ein feinfühligeres Fahren und Positionieren des Auslegers ist somit möglich.

Erfindungsgemäß wird durch ein Verfahren zur Montage einer Schwenklageranordnung mit einem Schwenkzapfen und mindestens einem Lagerbock, in dem eine Lagerbuchse mit einer Lagerbohrung aufgenommen ist und in der Lagerbohrung der Schwenkzapfen gleitend gelagert ist, eine verbesserte Schwenklagerung dadurch erreicht, dass die eine ballige Außenfläche aufweisende Lagerbuchse in eine negativ ballige Innenfläche eingefügt wird und die Lagerbuchse ausgerichtet wird und die Lagerbuchse nach erfolgter Ausrichtung in dem Lagerbock festgelegt wird. Bevorzugt ist, dass die Lagerbuchse in dem Lagerbock klebend festgelegt wird.

Nachfolgend wird die Erfindung an Hand eines in einer Zeichnung dargestellten Ausführungsbeispiels näher erläutert. Es zeigen:
Figur 1 eine schematische Gesamtansicht eines Oberwagens mit einem darauf gelagerten Ausleger,
Figur 2 eine Schnittansicht auf eine Schwenklageranordnung des Auslegers gemäß Figur 1 und
Figur 3 eine Detailansicht von Figur 2 aus dem Bereich eines Lagerbocks der Schwenklageranordnung in einer alternativen Ausführung.

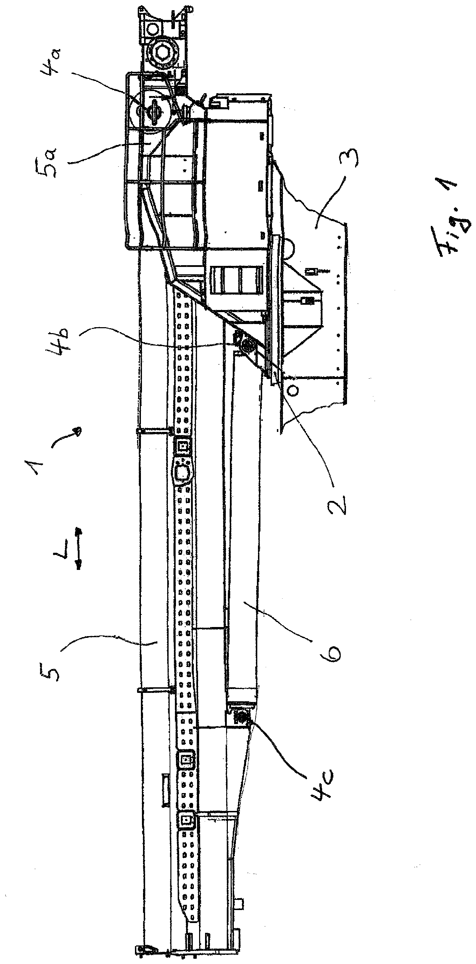

Die Figur 1 zeigt eine schematische Gesamtansicht eines Oberwagens 1 eines nicht dargestellten Mobilkrans. Der Oberwagen 1 ist in üblicher Weise über eine Drehverbindung 2 um eine vertikale Achse schwenkbar auf einen Unterwagen 3 gelagert. Aus Gründen der Übersichtlichkeit ist der Unterwagen 3 nur durch einen Abschnitt eines Rahmenteils dargestellt. An dem Oberwagen 1 ist über eine erste Schwenklageranordnung 4a ein teleskopierbarer Ausleger 5 mit einer zentralen Längsrichtung L an seinem Fuß 5a gelagert, um diesen über einen Wippzylinder 6 aufrichten zu können. In üblicher Weise ist dieser Wippzylinder 6 über eine zweite Schwenklageranordnung 4b an dem Oberwagen 1 und eine dritte Schwenklageranordnung 4c an dem Ausleger 5 gelagert.

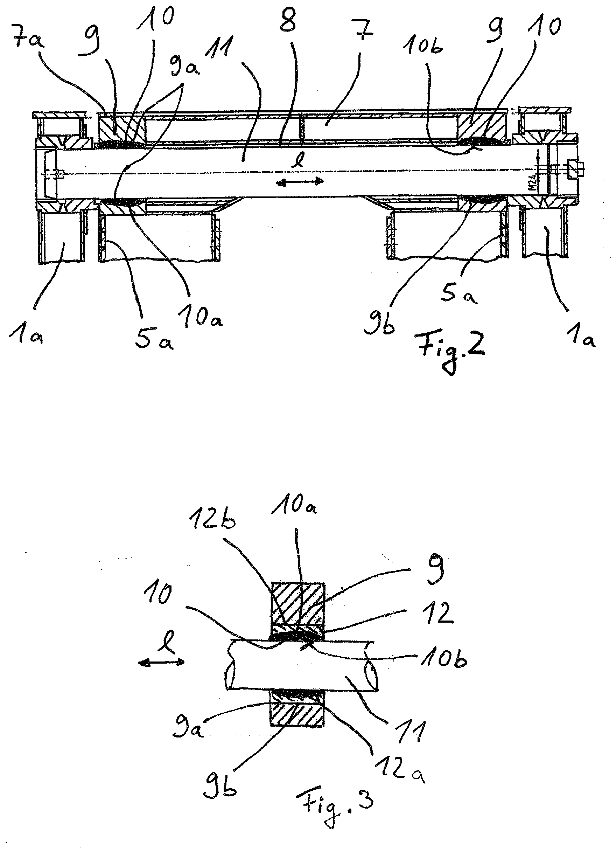

In der Figur 2 ist eine Schnittansicht auf die erste Schwenklageranordnung 4a des Auslegers 5 von hinten dargestellt. Von dem Fuß 5a des Auslegers 5 ist im Wesentlichen nur ein Teil eines Laschenrahmens 7 dargestellt, der über die gesamte Breite des Auslegers 5 verläuft und zentral über die Breite des Auslegers 5 verlaufend eine Laschenbohrung 8 begrenzt. Die Laschenbohrung 8 erstreckt sich rechtwinklig zur Längsrichtung L des Auslegers 5. Der Laschenrahmen 7 umfasst an seinen seitlichen und gegenüberliegenden Enden Aussparungen 7a, in die jeweils einer von zwei Lagerböcken 9 eingesetzt und anschließend mit dem Laschenrahmen 7 und dem angrenzenden Fuß 5a des Auslegers 5 verschweißt werden. Unter einem Lagerbock wird ein Konstruktionselement verstanden, mit dem ein sich drehender Schwenkzapfen 11 gelagert werden kann und hierbei Axial- und Querkräfte aufgenommen werden, um den Schwenkzapfen 11 in seiner Position zu halten und diesem nur eine Rotation zu erlauben. Die Lagerböcke 9 begrenzen in üblicher Weise eine Lagerbohrung 9a, die nicht wie üblich zylindrisch, sondern eine leicht negativ ballige beziehungsweise konkave Innenfläche 9b ausgespindelt ist. Hier wird ballig als eine schwache Innen-Wölbung der von Innenfläche 9b verstanden. Die Wölbung ist kreisbogenförmig mit einem großen Radius. Dieses Verständnis gilt auch für eine entsprechende ballige Außen-Wölbung. Die Lagerbockbohrungen 9a der Lagerböcke 9 sind jeweils in Verlängerung der Laschenbohrung 8 ausgerichtet. Zur Aufnahme eines Schwenkzapfens 11 sollen die Lagerbockbohrungen 9a der gegenüberliegenden Lagerböcke 9 vorzugsweise miteinander fluchten. Zwischen der Außenfläche des Schwenkzapfens 11 und der Innenfläche der Laschenbohrung 8 besteht Spiel, da die Lagerung des Schwenkzapfens 11 in den beiden Lagerböcken 9 erfolgt.

Im Zuge der Herstellung des Auslegers 5 werden die Lagerböcke 9 in den Laschenrahmen 7 eingeschweißt. Hierbei kommt es naturgemäß zu einem gewissen Grad an Schweißverzug, der zu Fluchtungsfehlern zwischen den beiden Lagerbockbohrungen 9a führt. Da die Aussparungen 7a für die Lagerböcke 9 im oberen Bereich des Auslegers 5 vorgesehen sind und somit auf einem stabileren unteren Bereich des Auslegers 5 angeordnet sind, weichen die Lagerböcke 9 durch den Schweißverzug in der Weise aus, dass in Längsrichtung L des Auslegers 5 und von unten auf den Fuß 5a des Auslegers 5 gesehen (entspricht der Ansicht gemäß Figur 2) die Lagerböcke 9 in dem Laschenrahmen 7 mit ihren äußeren Enden leicht nach innen gekippt und deren Lagerbockbohrungen 9a weisen zueinander einen Fluchtungsfehler auf. Ein zu korrigierender Schweißverzug tritt somit im Wesentlichen nur in einer gemeinsamen Ebene der beiden Lagerböcke 9 auf. In Längsrichtung L des Auslegers 5 gesehen bleibt auf nach dem Einschweißen die Ausrichtung der Lagerböcke 9 zueinander erhalten beziehungsweise verändert sich parallel zueinander, so dass die rechtwinklige Ausrichtung der Längsrichtung L des Auslegers 5 zu den Achsen der Lagerbockbohrungen 9a nicht zu erfolgen hat. Mit andern Worten der Schweißverzug erfolgt gerichtet in einer Ebene in Richtung der Oberseite des Auslegers 5 bei einem horizontalen Ausleger 5 gesehen. Dieser kann durch die erfindungsgemäße Schwenklageranordnung gut ausgeglichen werden und die Parallelität des Auslegers 5 zu der Mittellinie des Oberwagens bleibt erhalten. Der auftretende Schweißverzug liegt im Bereich von etwa 1 bis 2 Grad bezogen auf die ausgerichtete Ausgangslage vor dem Schweißen.

In diese üblicher Weise nicht fluchtenden Lagerbockbohrungen 9a werden dann Lagerbuchsen 10a mit einer balligen beziehungsweise konkaven Außenfläche 10a eingefügt. Für den Einfügevorgang in die negativ ballige Innenfläche 9b des Lagerbocks 9 sind die Lagerbuchsen 10 geschlitzt oder geteilt ausgebildet. Die Lagerbuchsen 10 weisen daher eine unterbrochene Lagerfläche auf. Da der Schwenkzapfen 11 nicht in der Lagerbuchse 10a rotiert sondern nur geringe Winkelbewegungen im Bereich kleiner 90 Grad vornimmt, kann der Bereich der Unterbrechung der Lagerfläche einfach in einen nicht belasteten Bereich ausgerichtet werden. Neben der Außenfläche 10a weisen die Lagerbuchsen 10 eine zentral zylindrische Lagerbohrung 10b, in die der Schwenkzapfen 11 eingeschoben wird.

Da die Außenfläche 10a der Lagerbuchse 10 und die Innenfläche 9b der Lagerbockbohrung 9a ballig beziehungsweise negativ ballig ausgebildet sind und gleichzeitig sich komplementär ergänzen, d.h. mit anderen Worten flächig aneinander liegen, kann jeweils über ein Drehen der beiden Lagerbuchsen 10 in den gegenüberliegenden Lagerböcken 9 erreicht werden, dass diese miteinander fluchten. Die komplementäre Ergänzung wird dadurch erreicht, dass die Radien der Kreisbögen der Balligkeit der Außenfläche 10a und der Innenfläche 9b identisch sind. Die Außenfläche 10a und die Innenfläche 9b stehen somit formschlüssig in Kontakt, auch wenn die Lagerbuchse 10 für Montagezwecke geteilt oder geschlitzt ist und somit eine abschnittsweise Unterbrechung der Formschlüssigkeit besteht. Nach dem Ausrichten werden die Lagerbuchsen 10 in den Lagerbohrungen 9a festgelegt. Dies kann beispielsweise über ein Einkleben der Lagerbuchsen 10 in den Lagerbockbohrungen 9a erfolgen. Hierbei ist vorgesehen, dass der Kleber der erst nach dem Ausrichten der Lagerbuchsen 10 aushärtet. Auch können die Lagerbuchsen 10 in den Lagerbockbohrungen 9a mechanisch über Stifte, Keile, Bolzen, Schrauben, Scheiben oder Platten festgesetzt werden, die axial, radial oder schräg an die Außenfläche 10a der Lagerbuchse 10 angreifen. Das Festlegen kann über Formschluss oder Klemmen erfolgen. Eine ausreichende Festlegung kann auch einfach durch eine Reibungserhöhung der Außenfläche 10a und somit über Reibschluss erfolgen. Durch die Festlegung ist gewährleistet, dass die für ein Schwenken des Auslegers 5 erforderliche Gleitbewegung in der ersten Schwenklageranordnung 4a zwischen dem Schwenkzapfen 11 und den beiden Lagerbuchsen 10 stattfindet.

Die Lagerbuchsen 10 sind als Kunststoffbuchsen mit einer Gleitschicht, auch bekannt als Hochleistungsgleitlager, ausgebildet. Der Kunststoff ist faserverstärkt, vorzugsweise Kunstharze mit Glas- und/oder Kohlefasern.

Der in die Lagerbuchsen 10 eingeschobene Schwenkzapfen 11 ragt an beiden Seiten aus den Lagerböcken 9 und somit aus dem Laschenrahmen 7 heraus. Die heraus ragenden Enden des Schwenkzapfens 11 werden jeweils drehfest in einem Gabelrahmen 1a des Oberwagens 1 gelagert.

In der Figur 3 ist eine Detailansicht von Figur 2 aus dem Bereich eines Lagerbocks 9 der ersten Schwenklageranordnung 4a in einer alternativen Ausführung dargestellt, in der die Lagerbuchse 10 nicht direkt in die Lagerbockbohrung 9a des Lagerbocks 9 eingesetzt ist, sondern in einem dort angeordneten Zwischenring 12. Dieser Zwischenring 12 weist eine zylindrische Außenfläche 12a und eine negativ ballige Innenfläche 12b auf. Dementsprechend ist der Lagerbock 9 mit einer zylindrischen Lagerbohrung 9a ausgestattet, in die der Zwischenring 12 eingefügt wird. Der Zwischenring 12 kann eingepresst oder eingeklebt werden. Die zu Figur 2 genannten Alternativen der Festlegung sind auch denkbar. Somit wird das Herstellen der negativ ballig Innenfläche 12 von dem Lagerbock 9 auf den Zwischenring 1 verlagert. Nach Einsetzen des Zwischenrings 12 entspricht der Aufbau des Lagerbocks 9 dem der zur Figur 2 beschrieben worden ist. Entsprechend wird auf die Beschreibung zur Figur 2 verwiesen. Bei dieser Ausführungsform könnte alternativ der Zwischenring 12 geteilt oder geschlitzt ausgebildet sein. Hierbei ist dann die Lagerbuchse 10 einteilig ausgebildet.

Obwohl die Erfindung vorstehend an Hand eines Mobilkrans und einer Schwenklageranordnung an einem Fuß eines Auslegers beschrieben worden ist, ist auch ein Einsatz dieser Schwenklageranordnung in anderen Bauteilen von Mobilkranen denkbar. Entsprechender Weise sind dann die Schwenkzapfen, der Laschenrahmen und der Gabelrahmen in ihrer Größe angepasst.

Bei einem Mobilkran kommt beispielsweise die Lagerung des Wippzylinders für den Ausleger in Frage. Bei einer Verwendung für Wippzylinder 6 kommt je Schwenklageranordnung 4b, 4c entweder nur ein Lagerbock 9 oder wie zuvor beschrieben zwei Lagerböcke 9 je nach Baugröße des Wippzylinders 6 zum Einsatz, da die Befestigungslaschen an dem Wippzylinder 6 im Vergleich zu dem Ausleger 5 entsprechend schmal. Die erfindungsgemäße Schwenklageranordnung 4b, 4c ermöglicht dann eine Ausrichtung der Schwenkzapfen der Wippzylinder parallel zu dem Schwenkzapfen 11 des Auslegers 5.

Neben Mobilkranen ist auch ein Einsatz bei anderen Kranen, Baggern, sonstigen Baumaschinen und Landmaschinen denkbar, wenn dort Schwenklageranordnungen für Ausleger, Schwingen, Arme, Stiele oder dergleichen zum Einsatz kommen, deren Schwenkbereich nicht umlaufend sondern auf einen geringen Winkelbereich begrenzt ist.

### Bezugszeichenliste

1 Oberwagen
1a Gabelrahmen
2 Drehverbindung
3 Unterwagen
4a erste Schwenklageranordnung
4b zweite Schwenklageranordnung
4c dritte Schwenklageranordnung
5 Ausleger
5a Fuß
6 Wippzylinder
7 Laschenrahmen
8 Laschenbohrung
9 Lagerbock
9a Lagerbockbohrung
9b Innenfläche
10 Lagerbuchse
10a Außenfläche
10b Lagerbohrung
11 Schwenkzapfen
12 Zwischenring
12a Innenfläche
12b Außenfläche
L Längsrichtung des Auslegers 5
I Längsrichtung des Schwenkzapfens 11

## Patentansprüche

1. Schwenklageranordnung mit einem Schwenkzapfen (11) und mindestens einem Lagerbock (9), in dem eine Lagerbuchse (10) mit einer Lagerbohrung (10b) aufgenommen ist und in der Lagerbohrung (10b) der Schwenkzapfen (11) gleitend gelagert ist, **dadurch gekennzeichnet, dass** die Lagerbuchse (10) eine ballige Außenfläche (10a) aufweist, die für eine Ausrichtung der Lagerbuchse (10) in einer negativ balligen Innenfläche (9b, 12a) eingefügt ist und die Lagerbuchse (10) nach erfolgter Ausrichtung in dem Lagerbock (9) festgelegt ist.

2. Schwenklageranordnung nach Anspruch 1, **dadurch gekennzeichnet, dass** der Lagerbock (9) an einem Laschenrahmen (7) angeschweißt ist.

3. Schwenklageranordnung nach Anspruch 1 oder 2, **dadurch gekennzeichnet, dass** die negativ ballige Innenfläche (9b) in einer Lagerbockbohrung (9a) ausgebildet ist.

4. Schwenklageranordnung nach Anspruch 3, **dadurch gekennzeichnet, dass** die Lagerbuchse (10) direkt in den Lagerbock (9) eingeklebt ist.

5. Schwenklageranordnung nach Anspruch 1 oder 2, **dadurch gekennzeichnet, dass** die negativ ballige Innenfläche (12a) in einem Zwischenring (12) ausgebildet ist, der in die Lagerbockbohrung (9a) eingefügt ist.

6. Schwenklageranordnung nach Anspruch 5, **dadurch gekennzeichnet, dass** die Lagerbuchse (10) in den Zwischenring (9) eingeklebt ist.

7. Schwenklageranordnung nach Anspruch 5 oder 6, **dadurch gekennzeichnet, dass** der Zwischenring (9) in die Lagerbockbohrung (9a) eingeklebt oder eingepresst ist.

8. Schwenklageranordnung nach einem der Ansprüche 1 bis 7, **dadurch gekennzeichnet, dass** zwei Lagerböcke (9) voneinander beabstandet sind, die einen gemeinsamen Schwenkzapfen (11) lagern.

9. Schwenklageranordnung nach Anspruch 8, **dadurch gekennzeichnet, dass** die beiden Lagerbuchsen (10) nach erfolgter Ausrichtung in dem Lagerbock (9) derart festgelegt sind, dass in Längsrichtung (I) des Schwenkzapfens (11) gesehen die Lagerbohrungen (10b) der Lagerbuchsen (10) miteinander fluchten.

10. Schwenklageranordnung nach einem der Ansprüche 1 bis 9, **dadurch gekennzeichnet, dass** die Lagerbohrung (10) zylindrisch ist.

11. Schwenklageranordnung nach einem der Ansprüche 1 bis 10, **dadurch gekennzeichnet, dass** die Lagerbuchse (10) aus Kunststoff, insbesondere mit einer Gleitschicht, hergestellt ist.

12. Mobilkran mit einer Schwenklageranordnung nach einem der Ansprüche 1 bis 11, **dadurch gekennzeichnet, dass** eine erste Schwenklageranordnung (4a) zwischen einem Oberwagen (1) und einem Fuß (5a) eines Auslegers (5) angeordnet ist und/oder eine zweite Schwenklageranordnung (4b) zwischen dem Oberwagen (1) und einem Wippzylinder (6) und/oder oder eine dritte Schwenklageranordnung (4c) zwischen dem Ausleger (5) und dem Wippzylinder (6) angeordnet ist.

13. Mobilkran nach Anspruch 12, **dadurch gekennzeichnet, dass** der mindestens eine Lagerbock (9) an dem Oberwagen (1) oder dem Ausleger (5) angeschweißt ist.

14. Verfahren zur Montage einer Schwenklageranordnung mit einem Schwenkzapfen (11) und mindestens einem Lagerbock (9), in dem eine Lagerbuchse (10) mit einer Lagerbohrung (10b) aufgenommen ist und in der Lagerbohrung (10b) der Schwenkzapfen (11) gleitend gelagert ist, insbesondere nach einem der Ansprüche 1 bis 13, **dadurch gekennzeichnet, dass** die eine ballige Außenfläche (10a) aufweisende Lagerbuchse (10) in eine negativ ballige Innenfläche (9b, 12a) eingefügt wird und die Lagerbuchse (10) ausgerichtet wird und die Lagerbuchse (10) nach erfolgter Ausrichtung in dem Lagerbock (9) festgelegt wird.

15. Verfahren nach Anspruch 14, **dadurch gekennzeichnet, dass** die Lagerbuchse (10) in dem Lagerbock (9) klebend festgelegt wird.

## Claims

1. Pivot bearing assembly comprising a pivot pin (11) and at least one bearing block (9), in which a bearing bush (10) having a bearing bore (10b) is received and the pivot pin (11) is slidingly supported in the bearing bore (10b), **characterised in that** the bearing bush (10) has a spherical outer surface (10a) which is inserted into a negatively rounded inner surface (9b, 12a) in order to orient the bearing bush (10), and the bearing bush (10), after being oriented, is fixed in the bearing block (9).

2. Pivot bearing assembly as claimed in claim 1, **characterised in that** the bearing block (9) is welded to a strap frame (7).

3. Pivot bearing assembly as claimed in claims 1 or 2, **characterised in that** the negatively rounded inner surface (9b) is formed in a bearing block bore (9a).

4. Pivot bearing assembly as claimed in claim 3, **characterised in that** the bearing bush (10) is adhered directly into the bearing block (9).

5. Pivot bearing assembly as claimed in claims 1 or 2, **characterised in that** the negatively rounded inner surface (12a) is formed in an intermediate ring (12) which is inserted into the bearing block bore (9a).

6. Pivot bearing assembly as claimed in claim 5, **characterised in that** the bearing bush (10) is adhered into the intermediate ring (9).

7. Pivot bearing assembly as claimed in claim 5 or 6, **characterised in that** the intermediate ring (9) is adhered or pressed into the bearing block bore (9a).

8. Pivot bearing assembly as claimed in any one of claims 1 to 7, **characterised in that** two bearing blocks (9) are spaced apart from one another and support a common pivot pin (11).

9. Pivot bearing assembly as claimed in claim 8, **characterised in that** the two bearing bushes (10), after being oriented, are fixed in the bearing block (9) such that, as seen in the longitudinal direction (I) of the pivot pin (11), the bearing bores (10b) of the bearing bushes (10) are aligned with one another.

10. Pivot bearing assembly as claimed in any one of claims 1 to 9, **characterised in that** the bearing bore (10) is cylindrical.

11. Pivot bearing assembly as claimed in any one of claims 1 to 10, **characterised in that** the bearing bush (10) is produced from synthetic material, in particular having a sliding layer.

12. Mobile crane comprising a pivot bearing assembly as claimed in any one of claims 1 to 11, **characterised in that** a first pivot bearing assembly (4a) is arranged between a superstructure (1) and a base (5a) of a jib (5) and/or a second pivot bearing assembly (4) is arranged between the superstructure (1) and a luffing cylinder (6) and/or a third pivot bearing assembly (4c) is arranged between the jib (5) and the luffing cylinder (6).

13. Mobile crane as claimed in claim 12, **characterised in that** the at least one bearing block (9) is welded to the superstructure (1) or the jib (5).

14. Method of assembling a pivot bearing assembly comprising a pivot pin (11) and at least one bearing block (9), in which a bearing bush (10) having a bearing bore (10b) is received and the pivot pin (11) is slidingly supported in the bearing bore (10b), in particular as claimed in any one of claims 1 to 13, **characterised in that** the bearing bush (10) which has a rounded outer surface (10a) is inserted into a negatively rounded inner surface (9b, 12a) and the bearing bush (10) is oriented, and the bearing bush (10), after being oriented, is fixed in the bearing block (9).

15. Method as claimed in claim 14, **characterised in that** the bearing bush (10) is adhesively fixed in the bearing block (9).

## Revendications

1. Système de palier pivotant comprenant un axe de pivotement (11) et au moins un support de palier (9) dans lequel est logé un coussinet (10) pourvu d'un alésage de palier (10b) et monté de manière coulissante dans l'alésage de palier (10b) de l'axe de pivotement (11), **caractérisé en ce que** le coussinet (10) possède une surface extérieure convexe (10a) qui est insérée dans une surface intérieure concave (9b, 12a) pour orienter le coussinet (10) et le coussinet (10) est immobilisé dans le support de palier (9) une fois l'orientation effectuée.

2. Système de palier pivotant selon la revendication 1, **caractérisé en ce que** le support de palier (9) est soudé à un cadre d'attache (7).

3. Système de palier pivotant selon la revendication 1 ou 2, **caractérisé en ce que** la surface intérieure concave (9b) est formée dans un alésage de support de palier (9a).

4. Système de palier pivotant selon la revendication 3, **caractérisé en ce que** le coussinet (10) est collé directement dans le support de palier (9).

5. Système de palier pivotant selon la revendication 1 ou 2, **caractérisé en ce que** la surface intérieure concave (12a) est formée dans une bague intermédiaire (12) qui est insérée dans l'alésage de support de palier (9a).

6. Système de palier pivotant selon la revendication 5, **caractérisé en ce que** le coussinet (10) est collé dans la bague intermédiaire (9).

7. Système de palier pivotant selon la revendication 5 ou 6, **caractérisé en ce que** la bague intermédiaire (9) est collée ou pressée dans l'alésage de support de palier (9a).

8. Système de palier pivotant selon l'une des revendications 1 à 7, **caractérisé en ce que** deux supports de palier (9) sont espacés l'un de l'autre, lesquels logent un axe de pivotement commun (11).

9. Système de palier pivotant selon la revendication 8, **caractérisé en ce que** les deux coussinets (10) sont immobilisés dans le support de palier (9) une fois l'orientation effectuée de telle sorte que les alésages de palier (10b) des coussinets (10) sont alignés entre eux dans la direction longitudinale (I) de l'axe de pivotement (11).

10. Système de palier pivotant selon l'une des revendications 1 à 9, **caractérisé en ce que** l'alésage de palier (10) est cylindrique.

11. Système de palier pivotant selon l'une des revendications 1 à 10, **caractérisé en ce que** le coussinet (10) est fabriqué à partir d'une matière plastique, notamment avec une couche de glissement.

12. Grue mobile comprenant un système de palier pivotant selon l'une des revendications 1 à 11, **caractérisée en ce qu'**un premier système de palier pivotant (4a) est disposé entre une superstructure (1) et un pied (5a) d'une flèche (5) et/ou un deuxième système de palier pivotant 4b) est disposé entre la superstructure (1) et un vérin de relevage (6) et/ou un troisième système de palier pivotant (4c) est disposé entre la flèche (5) et le vérin de relevage (6).

13. Grue mobile selon la revendication 12, **caractérisée en ce que** l'au moins un support de palier (9) est soudé à la superstructure (1) ou à la flèche (5).

14. Procédé de montage d'un système de palier pivotant comprenant un axe de pivotement (11) et au moins un support de palier (9) dans lequel est logé un coussinet (10) pourvu d'un alésage de palier (10b) et monté de manière coulissante dans l'alésage de palier (10b) de l'axe de pivotement (11), notamment selon l'une des revendication 1 à 13, **caractérisé en ce que** le coussinet (10), possédant une surface extérieure convexe (10a), est inséré dans une surface intérieure concave (9b, 12a) et le coussinet (10) est orienté et le coussinet (10) est immobilisé dans le support de palier (9) une fois l'orientation effectuée.

15. Procédé selon la revendication 14, **caractérisé en ce que** le coussinet (10) est collé dans le support de palier (9).
